# EUROPÄISCHE PATENTSCHRIFT

(11) **EP 0 661 788 B1**
(45) Veröffentlichungstag und Bekanntmachung des Hinweises auf die Patenterteilung: **18.06.1997**
(21) Anmeldenummer: 94810698.4
(22) Anmeldetag: 05.12.1994
(51) Int. Cl.: H02B 13/045, H01B 9/06, H01H 33/53, H01B 1/24

(54) **Hochspannungsanlage**
High-voltage arrangement
Arrangement à haute tension

(30) Priorität: 28.12.1993 DE 4344764
(43) Veröffentlichungstag der Anmeldung: 05.07.1995
(73) Patentinhaber: ABB RESEARCH LTD., 8050 Zürich (CH)
(72) Erfinder: Herbst, Ingo, Dr., CH-8050 Zürich (CH); Pietsch, Ralf-Dieter, Dr., CH-5452 Oberrohrdorf (CH)
(74) Vertreter: Kaiser, Helmut, Dr.

(56) Entgegenhaltungen:
- EP-A- 0 538 797
- DE-A- 3 112 022

## Beschreibung

### TECHNISCHES GEBIET

Die Erfindung geht aus von einer Hochspannungsanlage gemäss dem Oberbegriff des Anspruchs 1.

### STAND DER TECHNIK

Es sind Hochspannungsanlagen bekannt, die eine geerdete, mit Isoliergas, bespielsweise SF₆, gefüllte, metallische Kapselung aufweisen, deren innere, den hochspannungsbeaufschlagten Aktivteilen gegenüberliegende Oberfläche, mit einem Schutzbelag versehen ist. Dieser Schutzbelag soll diese Oberfläche glatt machen, unter anderem damit sie gereinigt werden kann, ohne dass Fasern oder sonstige Rückstände von Reinigungshilfen durch Oberflächenrauhigkeiten der inneren Oberfläche zurückgehalten werden, wodurch die dielektrische Festigkeit der Gasisolierstrecke reduziert würde. Die Oberfläche der Aktivteile wird bei derartigen Anlagen häufig mit einem gleichartigen Schutzbelag versehen.

Aus der Schrift DE 41 20 309 A1 ist eine Hochspannungsanlage bekannt, die eine isoliergasgefüllte metallische Kapselung aufweist, welche die spannungsbeaufschlagten Aktivteile umgibt. Auf der inneren Oberfläche der Kapselung ist ein Schutzbelag vorgesehen, ebenso auf der äusseren Oberfläche der Aktivteile. Bei dieser Hochspannungsanlage kann eine Reduzierung der dielektrischen Festigkeit der Isoliergasstrecken durch frei bewegliche oder fixierte Partikel nur beschränkt auftreten, da die Schutzbeläge speziell ausgebildet sind und zumindest teilweise mit einem zweiten Schutzbelag überzogen sind. In einer derartigen Hochspannungsanlage bewegen sich elektrisch leitfähige Partikel in der Regel nicht fort. Ferner wird durch diese Beschichtung die Intensität von durch Partikel hervorgerufenen Teilentladungen im Vergleich zu unbeschichteten Oberflächen deutlich reduziert. Freie Elektronen werden jedoch in dieser Art von Hochspannungsanlagen in der Regel nicht zuverlässig unschädlich gemacht. Die dielektrische Festigkeit der Isoliergasstrecken könnte jedoch verbessert werden, wenn Elektronen, die in der Nähe von Oberflächen durch Teilentladungen an Spitzen oder Partikeln entstehen, abgefangen würden. Zudem ist das Aufbringen eines zweiten Schutzbelags vergleichsweise aufwendig.

### DARSTELLUNG DER ERFINDUNG

Die Erfindung, wie sie in den unabhängigen Ansprüchen gekennzeichnet ist, löst die Aufgabe, eine Hochspannungsanlage zu schaffen, bei welcher auch freie Elektronen zuverlässig aus den Isolationsstrecken entfernt werden und bei welcher Teilentladungen, die durch freie Teilchen erzeugt werden, auf unkritische Intensitätswerte reduziert werden.

Die durch die Erfindung erreichten Vorteile sind im wesentlichen darin zu sehen, dass freie Elektronen, die beispielsweise durch Schaltvorgänge oder durch Entladungsvorgänge entstehen können, durch das Fulleren aufgenommen werden, ehe sie einen Überschlag einleiten können.

Die Hochspannungsanlage weist eine isoliergasgefüllte metallische Kapselung auf, welche spannungsbeaufschlagte Aktivteile umgibt. Sie weist zudem mindestens einen mindestens teilweisen Schutzbelag entweder auf der inneren Oberfläche der Kapselung oder auf der äusseren Oberfläche der Aktivteile, oder mindestens einen mindestens teilweisen Schutzbelag sowohl auf der inneren Oberfläche der Kapselung als auch auf der äusseren Oberfläche der Aktivteile auf. Der mindestens eine Schutzbelag ist mit mindestens einem Fulleren dotiert.

Der Schutzbelag kann als direkt auf die entsprechende Oberfläche aufgedampfte, aus mindestens einem Fulleren bestehende Schicht ausgebildet sein. Der Schutzbelag kann aber auch als ein mit mindestens einem Fulleren dotierter Lack auf die entsprechende Oberfläche aufgebracht werden, wobei als Lack ein Epoxidlack oder ein Lack auf der Basis von Polyäthylen vorgesehen ist.

Eine besonders gute Wirkung ergibt sich, wenn das mindestens eine Fulleren an der Oberfläche des Lacks bzw. des Schutzbelags konzentriert ist.

Als das mindestens eine Fulleren wird vorzugsweise C₆₀ eingesetzt. Es lassen sich jedoch auch Fullerene mit grösseren Molekülen einsetzen.

Die weiteren Ausgestaltungen der Erfindung sind Gegenstände der abhängigen Ansprüche.

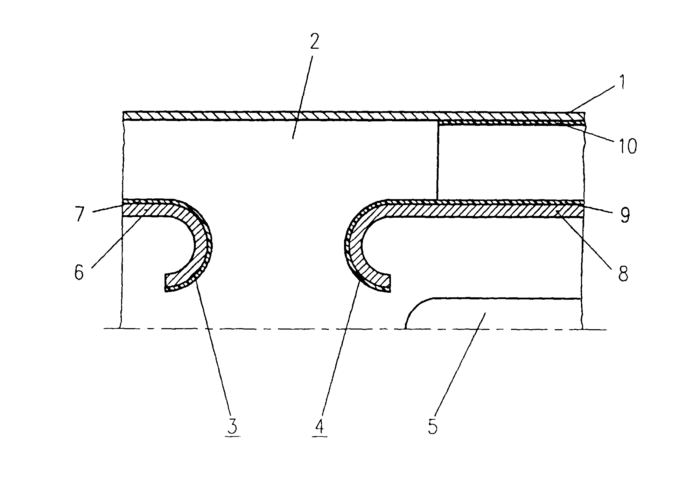

Die Erfindung, ihre Weiterbildung und die damit erzielbaren Vorteile werden nachstehend anhand der Zeichnung, welche lediglich einen Ausführungsweg darstellt, näher erläutert.

### KURZE BESCHREIBUNG DER ZEICHNUNG

Die einzige Figur zeigt einen Teilschnitt durch eine erfindungsgemässe Hochspannungsanlage.

### WEGE ZUR AUSFÜHRUNG DER ERFINDUNG

In der Figur ist ein Teilschnitt durch eine erfindungsgemässe Hochspannungsanlage dargestellt. Eine im wesentlichen zylindrisch aufgebaute, druckdichte metallische Kapselung 1 umschliesst einen mit Isoliergas, beispielsweise SF₆, gefüllten Innenraum 2. Im Zentrum der Kapselung 1 sind Aktivteile angeordnet, von denen jedoch nur eine Schaltstelle sehr vereinfacht dargestellt ist. Auf der einen Seite der Schaltstelle ist lediglich eine Abschirmung 3 dargestellt, die einen nicht gezeigten, feststehenden Kontakt konzentrisch umgibt. Ebenso sind die Kontakte für den Nennstromübergang, die innerhalb der Abschirmung 4 liegen, nicht dargestellt. Auf der anderen Seite der Schaltstelle ist eine Abschirmung 4 dargestellt, die einen beweglichen Kontakt 5 konzentrisch umgibt, der in ausgeschalteter Stellung gezeigt ist. Auch hier sind die für den Nennstromübergang nötigen Kontakte, die innerhalb der Abschirmung 4 liegen, nicht dargestellt. Die gezeigte Schaltstelle kann Teil eines Leistungsschalters oder eines Trenners oder eines Lastschalters oder eines Erdungsschalters oder eines Erdungstrenners sein.

Die Abschirmung 3 ist aus einem Metallblech 6 hergestellt, welches auf der der Kapselung 1 zugewandten Seite und auf der der gegenüberliegenden Abschirmung 4 zugewandten Seite mit einem Schutzbelag 7 überzogen ist. Die Abschirmung 4 ist aus einem Metallblech 8 hergestellt, welches auf der der Kapselung 1 zugewandten Seite und auf der der gegenüberliegenden Abschirmung 3 zugewandten Seite mit einem Schutzbelag 9 überzogen ist. Die innere Oberfläche der Kapselung 1 ist ebenfalls ganz oder teilweise mit einem Schutzbelag 10 überzogen. Die Schutzbeläge 7, 9 und 10 weisen als Grundmaterial beispielsweise einen Epoxidlack auf, in welchen Fullerene, hier insbesondere C₆₀, eingebracht werden. Ebenso kann Lack auf der Basis von Polyäthylen als Grundmaterial verwendet werden. In der Patentschrift US 5 227 038 wird die Herstellung von derartigen Fulleren beschrieben. Neben diesen Fullerenen können die für derartige Schutzbeläge üblichen leitenden oder halbleitenden Dotierungen, beispielsweise TiO₂-Komponenten oder leitfähig beschichtetes Al₂O₃ oder auch eine Mischung verschiedener Stoffe ebenfalls eingebracht werden. Es sind auch noch andere elektrisch leitfähige Stoffe denkbar für diese Einbringung. Durch den leitenden Schutzbelag wird jeweils die Oberfläche des damit beschichteten Teiles einer als dielektrisch glatt wirkenden Oberfläche angenähert. Etwaige feine Spitzen, die etwas aus der Oberfläche herausstehen, sind nun dielektrisch nicht mehr schädlich wirksam, da sie nun innerhalb des elektrisch leitenden oder dielektrisch aktiven Schutzbelages liegen.

Es ist möglich, die innere Oberfläche der Kapselung 1 und die äussere Oberfläche der Aktivteile gesamthaft mit derartigen Schutzbelägen zu versehen. Es kann jedoch auch sinnvoll sein, nur in einem Bereich oder in mehreren Bereichen der Hochspannungsanlage diesen Schutzbelag vorzusehen, und zwar insbesondere dort, wo Schaltgase oder sonstige Schaltrückstände auftreten können. Für manche Anwendungen genügt es jedoch auch, lediglich die Aktivteile mit einem Schutzbelag zu versehen, und zwar kann dies in einem oder mehreren Bereichen der Hochspannungsanlage erfolgen.

Wird das Fulleren an der Oberfläche des Lacks konzentriert, so ergibt sich eine besonders gute Wirksamkeit des Fullerens. Das Fulleren C₆₀ eignet sich wegen seiner guten Aufnahmefähigkeit für freie Elektronen besonders für den Einsatz in Hochspannungsanlagen. Es ist zudem vergleichsweise einfach herzustellen und ist deshalb für einen technischen Einsatz besonders gut geeignet. Fullerene mit einer höheren Anzahl von Kohlenstoffatomen als das C₆₀ können hier ebenfalls eingesetzt werden.

Als Schutzbelag 7, 9, 10 können auch direkt auf die entsprechende Oberfläche aufgedampfte Fullerenschichten, die aus mindestens einem Fulleren bestehen, eingesetzt werden. Oft wird in diesem Fall als zusätzliche Haftschicht ein Klebstoff auf Epoxidharzbasis auf die Oberfläche aufgebracht, ehe das Aufdampfen des Fullerens erfolgt. So wird eine besonders feste Verbindung zwischen den Fullerenmolekülen und der entsprechenden Oberfläche erreicht. Wird als Klebstoff ein Einkomponentenklebstoff eingesetzt, so ergibt sich eine besonders einfache Verarbeitung. Der Einkomponentenklebstoff Araldit AV 119 der Firma CIBA-GEIGY ( Araldit ist ein eingetragenes Warenzeichen der Firma CIBA-GEIGY) lässt sich besonders einfach verarbeiten, da er thixotrop ist. Da das Aufdampfen bei vergleichsweise hohen Temperaturen erfolgt, härtet der Einkomponentenklebstoff Araldit AV 119 dabei im wesentlichen aus. Sollte der Härtungsgrad jedoch noch nicht genügen, so muss anschliessend eine zusätzliche Härtung in einem Ofen erfolgen.

Bei der Herstellung dieses Schutzbelags 7, 9, 10 werden in der Regel zuerst die metallischen Oberflächen unmittelbar vor dem Auftragen des Einkomponentenklebstoffs Araldit AV 119 als zusätzliche Haftschicht sandgestrahlt, um eine gute Bindung der Haftschicht an die jeweilige Oberfläche zu erreichen. Nach dem Sandstrahlen werden die aufgerauhten Oberflächen chemisch mit einem Fettlöser wie Aceton oder Trichloräthylen entfettet. Danach wird dann der Einkomponentenklebstoff Araldit AV 119 gleichmässig auf die entfettete Oberfläche aufgetragen. Der Einkomponentenklebstoff Araldit AV 119 ist ein formulierter Epoxidharz-Klebstoff auf der Basis von Bisphenol A, der sich leicht und ohne zu tropfen verarbeiten lässt.

Es ist möglich, dass am Übergang zwischen der Oberfläche und der Haftschicht eventuell leitende Spitzen an der Oberfläche vorhanden sind, die zu Feldverzerrungen führen. Um derartige Feldverzerrungen auszugleichen, kann es sinnvoll sein, den Einkomponentenklebstoff mit einem leitenden oder halbleitenden Pulver zu dotieren, um so die Haftschicht zu einer Äquipotentialfläche zu machen, mit deren Hilfe eine Feldverzerrung in diesem Bereich vermieden wird. Auf diese Art kann sicher vermieden werden, dass in diesem Bereich Teilentladungen auftreten.

Zur Erläuterung der Wirkungsweise sei nun die einzige Figur etwas näher betrachtet. Wenn die Hochspannungsanlage unter Spannung ist, und wenn die Schaltstelle in Ausschaltstellung steht, wie dies schematisch in der Figur dargestellt ist, werden stets freie Elektronen durch ionisierende Strahlung oder durch Teilentladungen, die durch frei bewegliche oder fixierte Partikel initiiert werden, erzeugt. So enstandene freie Elektronen können lawinenartig weitere freie Elektronen erzeugen, was unter ungünstigen Umständen, wenn beispielsweise die Isolation infolge einer vorangegangenen Überlastung bereits etwas geschwächt ist, zu einem Überschlag zwischen den Aktivteilen und der geerdeten Kapselung 1 führen kann. Derartige Überschläge werden mit grosser Sicherheit vermieden, wenn die freien Elektronen unmittelbar nach ihrem Entstehen bereits durch die in dem Schutzbelag 7,9 vorhandenen Fullerene aufgenommen und damit unschädlich gemacht werden.

Wird eine konventionelle Hochspannungsanlage konsequent mit diesen fullerenhaltigen Schutzbelägen 7, 9, 10 versehen, so wird dadurch die Betriebssicherheit dieser Hochspannungsanlage beträchtlich erhöht.

Werden jedoch die bisherigen Sicherheitsmargen als ausreichend betrachtet, so können die Abmessungen der mit fullerenhaltigen Schutzbelägen 7, 9, 10 versehenen Hochspannungsanlage gegenüber den Abmessungen einer entsprechenden konventionellen Hochspannungsanlage deutlich verkleinert werden, was erhebliche wirtschaftliche Vorteile mit sich bringt.

Die fullerenhaltigen Schutzbeläge 7, 9, 10 wirken sich auch vorteilhaft aus, wenn sie mit bei Schaltvorgängen entstandenen, freie Elektronen aufweisenden Gaswolken Kontakt haben. Sie, beziehungsweise die Fullere, nehmen diese freien Elektronen auf und beschleunigen damit beispielsweise den Anstieg der Isolationsfestigkeit zwischen den Abschirmungen 3 und 4 und damit auch zwischen den Kontakten der Schaltstelle. Diese beschleunigte Wiederverfestigung der Schaltstelle hat zur Folge, dass das Ausschaltvermögen dieser Schaltstelle etwas gesteigert wird, beziehungsweise ihre Sicherheit erhöht wird.

### BEZEICHNUNGSLISTE

- 1: Kapselung
- 2: Innenraum
- 3,4: Abschirmung
- 5: Kontakt
- 6: Metallblech
- 7: Schutzbelag
- 8: Metallblech
- 9,10: Schutzbelag

## Patentansprüche

1. Hochspannungsanlage mit einer isoliergasgefüllten metallischen Kapselung (1), die spannungsbeaufschlagte Aktivteile umgibt, mit mindestens einem mindestens teilweisen Schutzbelag (7,9,10) entweder auf der inneren Oberfläche der Kapselung (1) oder auf der äusseren Oberfläche der Aktivteile, oder mit mindestens einem mindestens teilweisen Schutzbelag (7,9,10) sowohl auf der inneren Oberfläche der Kapselung (1) als auch auf der äusseren Oberfläche der Aktivteile, dadurch gekennzeichnet,
- dass der mindestens eine Schutzbelag (7,9,10) mit mindestens einem Fulleren dotiert ist.

2. Hochspannungsanlage nach Anspruch 1, dadurch gekennzeichnet,
- dass der Schutzbelag (7,9,10) als direkt auf die entsprechende Oberfläche aufgedampfte, aus mindestens einem Fulleren bestehende Schicht ausgebildet ist.

3. Hochspannungsanlage nach Anspruch 1, dadurch gekennzeichnet,
- dass der Schutzbelag (7,9,10) als ein mit mindestens einem Fulleren dotierter Lack auf die entsprechende Oberfläche aufgebracht ist.

4. Hochspannungsanlage nach Anspruch 3, dadurch gekennzeichnet,
- dass als Lack ein Epoxidlack oder ein Lack auf der Basis von Polyäthylen vorgesehen ist.

5. Hochspannungsanlage nach Anspruch 3, dadurch gekennzeichnet,
- dass das mindestens eine Fulleren an der Oberfläche des Lacks konzentriert ist.

6. Hochspannungsanlage nach einem der Ansprüche 1 bis 5, dadurch gekennzeichnet,
- dass als das mindestens eine Fulleren vorzugsweise C₆₀ eingesetzt wird.

7. Hochspannungsanlage nach einem der Ansprüche 1 bis 6, dadurch gekennzeichnet,
- dass mindestens eine an den Aktivteilen angebaute, Schaltkontakte dielektrisch schützende Abschirmung (3,4) mit dem Schutzbelag (7,9) versehen ist.

8. Hochspannungsanlage nach Anspruch 2, dadurch gekennzeichnet,
- dass die entsprechende Oberfläche vor dem Aufdampfen mit einer die Haftung des Fullerens verbessernden Schicht versehen ist.

9. Hochspannungsanlage nach Anspruch 8, dadurch gekennzeichnet,
- dass für die die Haftung des Fullerens verbessernde Schicht ein Einkomponentenkleber vorgesehen ist.

10. Hochspannungsanlage nach Anspruch 9, dadurch gekennzeichnet,
- dass als Einkomponentenkleber ein Kleber auf Epoxidharzbasis vorgesehen ist.

## Claims

1. High-voltage installation having a metallic enclosure (1) which is filled with insulating gas and surrounds voltage-carrying active parts, having at least one at least partial protective coating (7, 9, 10) either on the internal surface of the enclosure (1) or on the external surface of the active parts, or having at least one at least partial protective coating (7, 9, 10) both on the internal surface of the enclosure (1) and on the external surface of the active parts, characterized in that
- the at least one protective coating (7, 9, 10) is doped with at least one fullerene.

2. High-voltage installation according to Claim 1, characterized in that
- the protective coating (7, 9, 10) is formed as a layer vapour-deposited directly on the appropriate surface and composed of at least one fullerene.

3. High-voltage installation according to Claim 1, characterized in that
- the protective coating (7, 9, 10) is applied to the appropriate surface as a lacquer doped with at least one fullerene.

4. High-voltage installation according to Claim 3, characterized in that
- an epoxy lacquer or a lacquer based on polyethylene is provided as lacquer.

5. High-voltage installation according to Claim 3, characterized in that
- the at least one fullerene is concentrated at the surface of the lacquer.

6. High-voltage installation according to any of Claims 1 to 5, characterized in that
- preferably C₆₀ is used as the at least one fullerene.

7. High-voltage installation according to any of Claims 1 to 6, characterized in that
- at least one screen (3, 4) built onto the active parts and dielectrically protecting switching contacts is provided with the protective coating (7, 9).

8. High-voltage installation according to Claim 2, characterized in that
- the appropriate surface is provided with a layer which improves the adhesion of the fullerene prior to the vapour deposition.

9. High-voltage installation according to Claim 8, characterized in that
- a single-component adhesive is provided for the layer which improves the adhesion of the fullerene.

10. High-voltage installation according to Claim 9, characterized in that
- an adhesive based on epoxy resin is provided as single-component adhesive.

## Revendications

1. Arrangement à haute tension muni d'un encapsulage métallique (1) qui entoure la partie exposée à la tension, muni d'au moins un revêtement protecteur (7, 9, 10) au moins partiel sur la surface intérieure de l'encapsulage (1) ou sur la surface extérieure des parties actives, ou au moins un revêtement protecteur (7, 9, 10) au moins partiel à la fois sur la surface intérieure de l'encapsulage (1) et sur la surface extérieure des parties actives, caractérisé par le fait que l'au moins un revêtement protecteur (7, 9, 10) est dopé avec au moins un agent d'allongement.

2. Arrangement à haute tension selon la revendication 1, caractérisé par le fait que le revêtement protecteur (7, 9, 10) est réalisé sous la forme d'une couche composée au moins d'un agent d'allongement métallisée sous vide directement sur la surface correspondante.

3. Arrangement à haute tension selon la revendication 1, caractérisé par le fait que le revêtement protecteur (7, 9, 10) est appliqué sur la surface correspondante sous la forme d'un vernis dopé avec au moins un agent d'allongement.

4. Arrangement à haute tension selon la revendication 3, caractérisé par le fait que le vernis prévu est un vernis époxy ou un vernis à base de polyéthylène.

5. Arrangement à haute tension selon la revendication 3, caractérisé par le fait que l'au moins un agent d'allongement est concentré sur la surface du vernis.

6. Arrangement à haute tension selon l'une des revendications 1 à 5, caractérisé par le fait que du C₆₀ est utilisé de préférence comme au moins un agent d'allongement.

7. Arrangement à haute tension selon l'une des revendications 1 à 6, caractérisé par le fait qu'au moins un blindage (3,4) monté sur les parties actives et protégeant diélectriquement les contacts de commutation est muni du revêtement protecteur (7, 9).

8. Arrangement à haute tension selon la revendication 2, caractérisé par le fait que la surface correspondante est munie d'une couche améliorant l'adhérence de l'agent d'allongement avant la métallisation sous vide.

9. Arrangement à haute tension selon la revendication 8, caractérisé par le fait que c'est une colle monocomposant qui est prévue pour la couche améliorant l'adhérence de l'agent d'allongement.

10. Arrangement à haute tension selon la revendication 9, caractérisé par le fait que c'est une colle à base de résine époxy qui est prévue comme colle monocomposant.
